# EUROPEAN PATENT SPECIFICATION

(11) **EP 2 639 233 B1**
(45) Date of publication and mention of the grant of the patent: **04.01.2017**
(21) Application number: 12194212.2
(22) Date of filing: 26.11.2012
(51) Int. Cl.: C07D 333/06

(54) **Phosphine oxide, a process for the manufacture thereof and application thereof**
Phosphinoxid, ein Prozess für deren Herstellung und Anwendung dieser
Oxyde de phosphine, un processus pour la fabrication et l'application de celui-ci

(30) Priority: 12.03.2012 PL 39842112
(43) Date of publication of application: 18.09.2013
(73) Proprietor: Centrum Badan Molekularnych I Makromolekularnych Pan, 90-363 Lodz (PL)
(72) Inventor: Drabowicz, Jozef, 93-419 Lodz (PL); Krasowska, Dorota, 92-517 Lodz (PL)
(74) Representative: Brodowska, Iwona

(56) References cited:
- US-A- 4 056 571
- CHENG HUANG ET AL: "Proline/Pipecolinic Acid-Promoted Copper-Catalyzed P -Arylation", THE JOURNAL OF ORGANIC CHEMISTRY, vol. 71, no. 13, 1 June 2006 (2006-06-01), pages 5020-5022, XP055049834, ISSN: 0022-3263, DOI: 10.1021/jo060492j

## Description

The subject matter of the invention is a novel compound, phosphine oxide, a process for the manufacture thereof and application thereof for the preparation of heretofore not reported polythiophene systems functionalised at position 3 with a chiral 2-phosphinylethyl moiety, used as substrates in the synthesis of electronic materials with molecular sizes.

Only one compound being a phosphine oxide whose structure is most similar to the phosphine oxide according to the invention has been reported in literature: diphenyl-(1*S*,2*S*)-2-(3-thienyl)-2-epoxyethyl phosphine oxide [Chemistry - An Asian Journal, 3, 1500 (2008)]. Furthermore, several phosphine oxide systems which contain a tetrasubstituted thienyl ring functionalised at position 2 with a 2-(diphenylphosphinyl)ethyl substituent are reported in the literature *[*Phosphorus, Sulfur, Silicon and Related Elements, 178, 353 (2003)] and two phosphine oxides which contain a tetrasubstituted thienyl ring functionalised at position 2 with a diphenylphosphinyl substituent [Chromatographia, 55, 25 (2002)].

The compound is *t*-butyl-2-(3'-thienyl)ethyl-phenyl phosphine oxide of Formula **1** 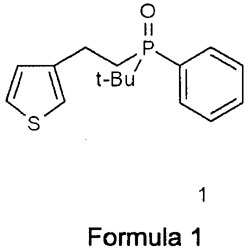 in the form of a racemic mixture and/or an optically active enantiomer.

The novel compound is a white solid with a melting point of 113-114°C for the racemic mixture and 145-146°C for the enantiomerically pure compound, soluble in chloroform, acetone, acetonitrile, methanol, methylene chloride, ethyl acetate and barely soluble in diethyl ether and hexane.

The processes for the manufacture of the novel compound of Formula **1** according to the invention consist in that secondary *t*-butyl-phenyl phosphine oxide (also known as *t*-butyl-phenyl) *H* phosphinate) of Formula **2** in the racemic or optically active form 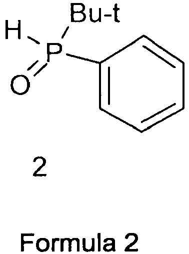 is treated with a base selected from a group consisting of alkyl lithiums, lithium amides of secondary amines, alkali metal hydrides, alkali metal alkanoates, C1-C3 alcohol derivatives, preferably sodium hydride in the form of suspension in mineral oil, in the tetrahydrofuran medium at 0 °C, for a period necessary for the secondary phosphine oxide to react completely; subsequently, 2-(3'-thienyl)ethyl halide, preferably chloride or bromide, is added to the reaction mixture at a temperature of 0 °C; subsequently, the reaction mixture is left to reach room temperature and the reaction proceeds further for a period necessary for the sodium salt of the secondary phosphine oxide to react completely; subsequently, the crude product is extracted from the reaction mixture, preferably with dichloromethane and, after solvent evaporation, the crude product is purified, preferably using column chromatography or by washing with a cold solvent, preferably pentane, hexane, heptane or diethyl ether. A procedure of inverse combination of both reagents may alternatively be used. If so, a tetrahydrofuran solution of the sodium salt of secondary *t-*butyl-phenyl phosphine oxide is added drop wise to a solution of 2-(3'-thienyl)ethyl chloride, alternatively bromide, in tetrahydrofuran using a canula at 0°C; subsequently, the reaction mixture is left to reach room temperature and the reaction proceeds further for a period necessary for the sodium salt of the phosphine oxide added to react completely; subsequently, the crude product is extracted from the reaction mixture, preferably with dichloromethane and, after solvent evaporation, the crude product is purified, preferably using column chromatography or by washing with cold hexane.

The subject matter of the invention is also the application of the compound of Formula 1 as a monomer in the polymerisation reaction which yields polythiophene systems functionalised at position 3 with a chiral 2-phosphinylethyl moiety. The polythiophenes obtained through the polymerisation contain a conjugated double bond system, being useful substrates for the manufacture of electronic materials with molecular dimensions.

The subject matter of the invention is illustrated by the following examples.

### Example I.

To obtain racemic *t*-butyl-2-(3'-thienyl)ethyl-phenyl phosphine oxide of Formula **1,** the following procedure was used:

To a suspension of 50% sodium hydride (0.763 g, 15.90 mmol) in 50 ml of tetrahydrofuran at a temperature of 0 °C in argon atmosphere, a solution of secondary *t*-butyl-phenyl phosphine oxide (2.633 g, 14.45 mmol) of Formula 2 in 50 ml of tetrahydrofuran was slowly added dropwise and it was left stirring until gaseous hydrogen ceased to evolve. Subsequently, previously distilled off 2-(3'-thienyl)ethyl chloride (2.120 g, 14.45 mmol) was slowly added dropwise to the solution of the resulting sodium salt of *t-*butyl-phenyl phosphine oxide and the reaction solution was stirred for 3 h at a temperature of 0 °C; subsequently, the reaction mixture was left to reach room temperature and it was stirred for further 21 h. Reaction progress was monitored using ³¹P NMR spectroscopy. After 24 h, no presence of the sodium salt of the substrate of Formula 2 in the reaction mixture was found. 50 ml of saturated aqueous NH₄Cl solution and 50 ml CH₂Cl₂ was added to the reaction mixture and the liquid was transferred to the separation funnel. The aqueous solution was extracted with three 40 ml portions of dichloromethane. Merged organic layers were washed with brine (1x50 ml) and after separation they were dried over magnesium sulphate. Subsequently, the desiccant was filtered off and the filtrate was evaporated in vacuum. The crude product (3.690 g) was purified by washing with cold hexane, obtaining 3.584 g (yield: 84.9 %) of racemic *t-*butyl-2-(3'-thienyl)ethyl-phenyl phosphine oxide in the form of white solid.

### Example II.

To a stirred solution of secondary *t*-butyl-phenyl phosphine oxide (0.330 g, 1.81 mmol) in freshly distilled tetrahydrofuran (15 ml) in argon atmosphere, cooled to a temperature of -78°C, a solution of n-butyl lithium in hexane (1.66 ml; C=1.2 mol/l) was added dropwise. The reaction solution was stirred at that temperature for further 1 h; subsequently, it was left to reach a temperature of -30°C and then 2-(3'-thienyl)ethyl bromide (0.346 g, 1.81 mmol) was slowly added dropwise. The reaction mixture was left to reach ambient temperature. Reaction progress was monitored using ³¹P NMR spectroscopy. The reaction was confirmed to be completed after 24 hours. 50 ml of saturated aqueous NH₄Cl solution was added to the reaction mixture which was additionally diluted with a 50 ml portion of CH₂Cl₂ and the liquid was transferred to the separation funnel and extracted. The organic layer was separated and the aqueous phase left was additionally washed twice with dichloromethane (50 mL each). Merged organic layers were dried over anhydrous MgSO₄, filtered and evaporated in vacuum. The crude product (0.299 g) was purified using column chromatography [silica gel, Et₂OgCH₂Cl₂:MeOH (20:1)], to obtain 0.240 g of the product (yield: 45%).

The spectroscopic properties of the resulting compound of Formula 1 are as follows:
**¹H NMR** [ppm] (200 MHz, CDCl₃) δ = 1.14 (d, ³J_{P-H}=14.50 Hz, 9H, Me₃C), 2.23-2.43 (m, 2H, CH₂-C3'C3'_{Thioph}), 2.48-2.72 (m, 1 H, CH₂-P), 2.97-3.16 (m, 1 H, CH₂-P), 6.91-6.95 (m, 2H, ArC3'_{Thioph}), 7.21-7.24 (m, 1 H, ArC3'_{Thioph}), 7.45-7.58 (m, 3H, Ar), 7.69-7.78 (m, 2H, Ar);
**³¹P NMR** [ppm] (81 MHz, CDCl₃) δ = 48.93;
¹³C **NMR** [ppm] (50 MHz, CDCl₃) δ = 20.99 (d, J=3.22 Hz, CH₂-C3'_{Tioph}), 23.05 (d, J=62.02 Hz, CH₂-P), 23.19 (s, CH₃C), 31.46 (d, J=68.90 Hz, CH₃C), 119.30 (s, C2'_{Tioph}), 124.52 (s, C5'_{Tioph}), 126.50 (s, C4'_{Tioph}), 127.03 (d, J=10.56 Hz, *o*-C_{Ar}x2), 128.51 (d, J=86.05 Hz, *ipso-*C_{Ar}), 130.19 (s, *p*-C_{Ar}), 130.56 (d, J=7.8 Hz, *m*-C_{Ar}x2), 140.62 (d, J=14.44 Hz, C3'_{Tioph}).
**MS (Cl/isobutane):** m/z (%): 293.2 (100) [M+1], 585.3 (72.5) [2M+1]
**HRMS (EI)** for C₁₆H₂₁OPS: calc.: 292.10507, determined: 292.10488
**Elemental analysis:** for C₁₆H₂₁OPS: calc.: C(65.73%), H(7.24%), S(10.97%); determined: C(65.82%), H(7.08%), S(10.95%),
**IR (KBr) [cm⁻¹]:**
3074, 3048 (C-H_{aryl}); 2979, 2933, 2911.2865 (C-Hₐₗᵢₚₕ), 1464, 1435 (C-Cₐₗᵢₚₕ), 1169.1156 (P=O)strong

### Example III.

To obtain optically active *t*-butyl-2-(3'-thienyl)ethyl-phenyl phosphine oxide of Formula **1,** the following procedure was used:

To a suspension of 50% sodium hydride (0.082 g, 1.71 mmol) in 5 ml of tetrahydrofuran at a temperature of 0 °C in argon atmosphere, a solution of secondary levorotatory *t*-butyl-phenyl phosphine oxide with configuration *S* and [α]_{D}=-30.58 (0.86, CHCl₃) (0.282 g, 1.55 mmol) of Formula 2 in 10 ml of tetrahydrofuran was slowly added dropwise and it was left stirring until gaseous hydrogen ceased to evolve. Subsequently, previously distilled off 2-(3'-thienyl)ethyl bromide (0.296 g, 1.55 mmol) was slowly added dropwise to the solution of the resulting sodium salt of *t*-butyl-phenyl phosphine oxide and the reaction solution was stirred for 3 h at a temperature of 0 °C; subsequently, the reaction mixture was left to reach room temperature and it was stirred for further 24 h. Reaction progress was monitored using ³¹P NMR spectroscopy. After 27 h, no presence of the substrate of Formula **2** in the reaction mixture was found. 15 ml of saturated aqueous NH₄Cl solution and 15 ml CH₂Cl₂ was added to the reaction mixture and the liquid was transferred to the separation funnel. The aqueous solution was extracted with three 15 ml portions of dichloromethane. Merged organic layers were washed with brine (1x20 ml) and after separation they were dried over magnesium sulphate. Subsequently, the desiccant was filtered off and the filtrate was evaporated in vacuum. The crude product (0.439 g) was purified by crystallisation in the CH₂Cl₂:hexane system, obtaining 0.176 g (yield: 39 %) of optically pure levorotatory *t*-butyl-2-(3'-thienyl)ethyl-phenyl phosphine oxide with absolute configuration (*S*) and [α]_{D}=-35.57 (2.8, CH₂Cl₂) in the form of white solid. The enantiomeric excess of the isolated product was determined using ¹HNMR with enantiomerically pure levorotatory *t*-BuPhP(S)OH acid as a chiral solvation reagent. The analysis confirmed 100% ee for the resulting product.
**¹H NMR** [ppm] (200 MHz, CDCl₃) δ = 1.15 (d, ³J_{P-H}=14.47 Hz, 9H, Me₃C), 2.23-2.49 (m, 2H, CH₂-C3'_{Tioph}), 2.54-2.72 (m, 1 H, CH_{A}-P), 2.97-3.16 (m, 1 H, CH_{B}-P), 6.91-6.95 (m, 2H, Ar_{Tioph}), 7.21-7.24 (m, 1 H, Ar_{Tioph}), 7.49-7.52 (m, 3H, Ar), 7.70-7.78 (m, 2H, Ar);
**³¹P NMR** [ppm] (81 MHz, CDCl₃) δ = 48.92;
**Elemental analysis:** for C₁₆H₂₁OPS: calc.: C(65.73%), H(7.24%), S(10.97%); determined: C(65.64%), H(7.11%), S(10.99%);
IR (KBr) **[cm⁻¹]:**
3075, 3049 (C-H_{aryl}); 2979, 2933, 2912.2866 (C-Hₐₗᵢₚₕ), 1464, 1435 (C-Cₐₗᵢₚₕ), 1169.1156 (P=O)strong

### Example IV: polymerisation of racemic phosphine oxide.

Anhydrous FeCl₃ (1.112 g, 6.84 mmol) was suspended in dry chloroform (10 ml) in argon atmosphere; subsequently, a solution of the monomer (of Formula 1) (0.5 g, 1.71 mmol) in 10 ml of chloroform was added dropwise to the resulting suspension for 15 minutes. At that time gaseous hydrogen chloride was being evolved. To remove the HCl being released, a gentle argon stream was passed through the reaction mixture for 1/5 h. The reaction mixture was stirred for further 24 h at room temperature. Subsequently, the mixture was dissolved in 500 ml of chloroform, transferred to the separation funnel and extracted with 1 M HCl solution (portionwise, 200 ml each). The washing was ended when no Fe³⁺ was found in the aqueous layer (qualitative analysis with KSCN). The organic layer was dried over anhydrous MgSO₄; subsequently, the desiccant was filtered and the filtrate was evaporated in a vacuum rotary evaporator. The polymeric product (0.490 g) in the form of dark red solid was identified using ¹H NMR and ³¹P NMR spectroscopy.
**¹H NMR** [ppm] (200 MHz, CDCl₃) δ = 0.50-1.80- (very broad signal with maxima (relative intensities): δ=0.80(0.33); 1.11 (0.95), 1.40(1.00); 1.70(0.15); (Me₃C)), 1.80-2.38 (broad singlet, -CH₂-C3'_{Tioph}), 2.62-2.83 (broad singlet, -CH_{A}-P), 3.10-3.36 (broad singlet -CH_{B}-P), 6.96-7.71 (broad multiplet, H_{Ph},H₄-_{Tioph}),
**³¹P NMR** [ppm] (81 MHz, CDCl₃) δ = 48.95 (broad singlet)

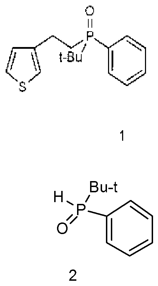

## Claims

1. *t*-Butyl-2-(3'-thienyl)ethyl-phenyl phosphine oxide of Formula 1 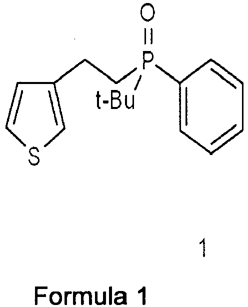 in the form of a racemic mixture and/or optically active enantiomers.

2. A process for the manufacture the phosphine oxide of Formula 1, **characterised in that**, secondary *t*-butyl-2-(3'thienyl)ethyl-phenyl phosphine oxide of Formula 2 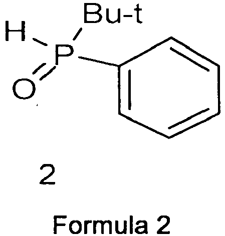 is treated with a base, preferably with sodium hydride in the form of suspension in mineral oil, in the tetrahydrofuran medium at a temperature of 0°C, for a period necessary for the secondary phosphine oxide to react completely; subsequently, 2-(3'-thienyl)ethyl halide, preferably chloride or bromide, is added to the reaction mixture at a temperature of 0 °C; subsequently, the reaction mixture is left to reach room temperature and the reaction proceeds further for a period necessary for the sodium salt of the secondary phosphine oxide to react completely; subsequently, the crude product is extracted from the reaction mixture, preferably with dichloromethane and, after solvent evaporation, the crude product is purified, preferably using column chromatography or by washing with cold hexane.

3. A process according to Claim 2, **characterised in that** a tetrahydrofuran solution of the sodium salt of secondary *t*-butyl-phenyl phosphine oxide of Formula 2 is added drop wise to a solution of 2-(3'-thienyl)ethyl chloride, alternatively bromide, in tetrahydrofuran using a canula at 0°C; subsequently, the reaction mixture is left to reach room temperature and the reaction proceeds further for a period necessary for the sodium salt of the phosphine oxide added to react completely; subsequently, the crude product is extracted from the reaction mixture, preferably with dichloromethane and, after solvent evaporation, the crude product is purified, preferably using column chromatography or by washing with cold hexane.

4. A process according to Claim 2 or 3, **characterised in that** 2-(3'-thienyl)ethyl bromide (chloride) is used in an amount so that the molar ratio to the sodium salt of secondary *t*-butyl-phenyl phosphine oxide is at least 1:1.

5. A process according to Claim 2 or 3, **characterised in that** sodium hydride is used in an amount so that the molar ratio of sodium hydride to secondary *t-*butyl-phenyl phosphine oxide is at least 1:1.

6. An application of the compound according to Claim 1 as a monomer in the polymerisation reaction for the preparation of polythiophene systems functionalised at position 3 with a chiral 2-phosphinylethyl moiety.

## Patentansprüche

1. Oxid 2-[(3'- thienyl)äthyl-Phenyl- Phosphinoxid t-Butyl] von Formel 1 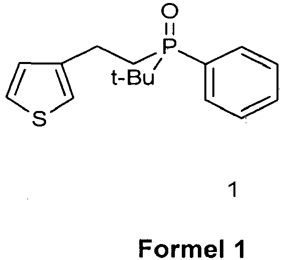 in Form einer racemischen Mischung und/oder optisch aktiver Enantiomere.

2. Ein Prozeß für die Herstellung das Phosphinoxid von Formel 1, gekennzeichnet in diesem t-Butyl-Phenyl-Phosphinoxid t-butylphenylphosphine zweitensoxid von Formel 2 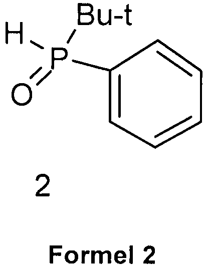 wird mit einer Unterseite, vorzugsweise mit Natriumhydrid in Form von Aufhebung im Mineralöl, im Tetrahydrofuranmittel bei einer Temperatur von 0 °C, während einer Periode behandelt, die für das Sekundärphosphinoxid notwendig ist, vollständig zu reagieren; nachher (3' - thienyl) wird Ethylhalogenid 2, vorzugsweise Chlorverbindung oder Bromid, dem Reaktionsgemisch bei einer Temperatur von 0 °C hinzugefügt; nachher wird das Reaktionsgemisch ReichweiteRaumtemperatur überlassen und die Reaktion fährt weiter während einer Periode fort, die für das Natriumsalz des Sekundärphosphinoxids notwendig ist, vollständig zu reagieren; nachher wird das grobe Produkt vom Reaktionsgemisch, vorzugsweise mit Dichloromethan extrahiert und, nach lösender Verdampfung, wird das grobe Produkt, vorzugsweise mit Säulenchromatographie gereinigt oder, indem man mit kaltem Hexan wäscht.

3. Ein Prozeß entsprechend dem Anspruch 2, gekennzeichnet in dem eine Tetrahydrofuranlösung des Natriumsalzes des t-Butyl-Phenyl- Phosphinoxid t-butylphenylphosphine zweitensoxids von Formel 2 wird tropfenweise einer Lösung von (3' - thienyl) Ethylchlorverbindung 2, wechselweise Bromid, im Tetrahydrofuran mit einem Canula an 0°C hinzugefügt; nachher wird das Reaktionsgemisch ReichweiteRaumtemperatur überlassen und die Reaktion fährt weiter während einer Periode fort, die für das Natriumsalz des Phosphinoxids notwendig ist, das addiert wird, um vollständig zu reagieren; nachher wird das grobe Produkt vom Reaktionsgemisch, vorzugsweise mit Dichloromethan extrahiert und, nach lösender Verdampfung, wird das grobe Produkt, vorzugsweise mit Säulenchromatographie gereinigt oder, indem man mit kaltem Hexan wäscht.

4. Ein Prozeß entsprechend Anspruch 2 oder 3, gekennzeichnet in dem (3' - thienyl) Ethylbromid 2 (Chlorverbindung) wird in einer Menge verwendet, damit das molare Verhältnis zum Natriumsalz des t-Butyl-Phenyl- Phosphinoxid t-butylphenylphosphine zweitensoxids mindestens 1:1 ist.

5. Ein Prozeß entsprechend Anspruch 2 oder 3, gekennzeichnet in diesem Natriumhydrid wird in einer Menge verwendet, damit das molare Verhältnis des Natriumhydrids zum t-Butyl-Phenyl- Phosphinoxid t-butylphenylphosphine zweitensoxid mindestens 1:1 ist.

6. Eine Anwendung des Mittels entsprechend Anspruch 1 als Monomere in der Polymerisierungreaktion für die Vorbereitung der polythiophene Systeme functionalised in Position 3 mit einer chiralen 2 phosphinylethyl Hälfte, Spezifikation Auszug A zusammengesetztes [3'-thienyl)äthyl-Phenyl-Phosphinoxid t-Butyl]2 Oxid von Formel 1 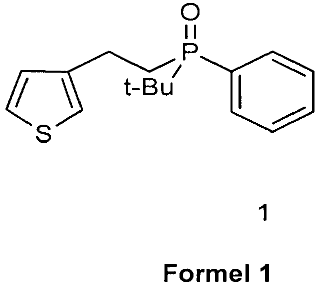 in Form einer racemischen Mischung und optisch aktiver Isomere. Das Romanmittel ist ein weißer Körper mit einem Schmelzpunkt von 113-114°C für die racemische Mischung und von 145-146°C für das enantiomerically reine Mittel, löslich im Chloroform, im Azeton, im Acetonitril, im Methanol, im Methylenchlorid, im äthylacetat und kaum im Löslichen im Diäthyläther und im Hexan. Das Mittel wird benutzt, wie eine Monomere in der Polymerisierungreaktion, die polythiophene Systeme erbringt, in Position 3 mit einer chiralen 2 phosphinylethyl Hälfte functionalised. Die polythiophenes, die durch die Polymerisierung erreicht werden, enthalten ein konjugiertes Doppelbindungsystem und sind nützliche Substrate für die Herstellung der elektronischen Materialien mit molekularen Maßen. Das Thema der Erfindung ist auch ein Prozeß für die Herstellung des Romanmittels von Formel 1.

## Revendications

1. t-butyl-2- (3'-thiényl) éthyl-phényl oxyde de phosphine de formule 1 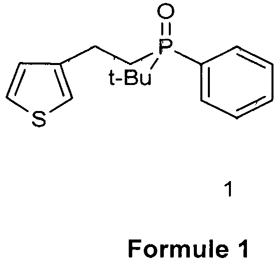 sous la forme d'un mélange racémique et/ou énantiomères optiquement actifs.

2. Procédé pour la fabrication du oxyde de phosphine de formule 1, **caractérisé en ce que**, secondaire t-butyl-2- (3'thienyl) d'oxyde d'éthyle-phényl phosphine de formule 2 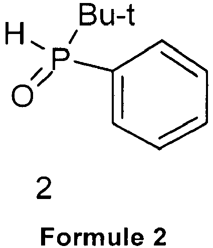 est traité avec une base, de préférence avec de l'hydrure de sodium sous la forme de suspension dans une huile minérale, dans le milieu tétrahydrofurane, à une température de 0°C, pendant une durée nécessaire à l'oxyde de phosphine secondaire pour réagir complètement; par la suite, le 2- (3'-thiényl) éthyl halogénure, de préférence chlorure ou bromure, on ajoute au mélange réactionnel à une température de 0°C; par la suite, le mélange réactionnel est laissé à atteindre la température ambiante et la réaction se déroule pendant une période supplémentaire nécessaire pour le sel de sodium de l'oxyde de phosphine secondaire pour réagir complètement; par la suite, le produit brut est extrait à partir du mélange réactionnel, de préférence avec du dichlorométhane et, après evaporation du solvant, le produit brut est purifié, de préférence en utilisant une Chromatographie sur colonne ou par lavage avec de l'hexane froid.

3. Procédé selon la revendication 2, **caractérisé en ce qu'**une solution dans le tétrahydrofuranne du sel de sodium de t-butyl-phényle secondaire oxyde de phosphine de formule 2 est ajouté goutte à goutte à une solution de 2- (3'-thiényl) le chlorure d'éthyle, en variante, un bromure, dans le tétrahydrofuranne en utilisant une canule à 0°C; par la suite, le mélange réactionnel est laissé à atteindre la température ambiante et la réaction se déroule pendant une période supplémentaire nécessaire pour le sel de sodium de l'oxyde de phosphine ajouté pour réagir complètement; par la suite, le produit brut est extrait à partir du mélange réactionnel, de préférence avec du dichlorométhane et, après evaporation du solvant, le produit brut est purifié, de préférence en utilisant une Chromatographie sur colonne ou par lavage avec de l'hexane froid.

4. Procédé selon la revendication 2 ou 3, **caractérisé en ce que** le 2- (3'-thiényl) éthyl bromure (chlorure) est utilisé en une quantité telle que le rapport molaire de sel de sodium de t-butyl-phényle oxyde de phosphine secondaire est au moins 1: 1.

5. Procédé selon la revendication 2 ou 3, **caractérisé en ce que** l'hydrure de sodium est utilisé en une quantité telle que le rapport molaire d'hydrure de sodium à t oxyde secondaire butyl-phényl phosphine est d'au moins 1: 1.

6. Application du composé selon la revendication 1 en tant que monomère dans la réaction de polymérisation pour la préparation de systèmes de polythiophène fonctionnalisés en position 3 avec un groupement 2-phosphinylethyl chirale de phosphinylethyl. Spécification résumé Composite [3'-thiényl) phosphine éthyl-phényle t-butyl] 2 oxyde de formule 1 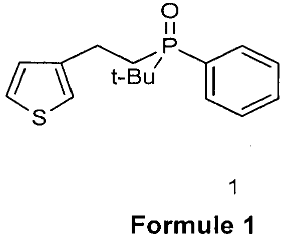 sous forme de mélange racémique et optiquement d'isomères actifs. Le composé de roman est un solide blanc avec un point de fusion de 113-114°C pour le mélange racémique et de 145-146°C pour le composé enantiomerically pur, soluble dans le chloroforme, l'acétone, l'acétonitrile, le méthanol, le chlorure de méthylène, l'acétate éthylique et à peine le soluble en éther diéthylique et hexane. Le composé est employé comme un monomère dans la réaction de polymérisation qui rapporte des systèmes de polythiophene functionalised à la position 3 avec des 2 parties chirale de phosphinylethyl. Les polythiophenes obtenus par la polymérisation contiennent un système conjugué de lien double, étant les substrats utiles pour la fabrication des matériaux électroniques avec des dimensions moléculaires. Les thèmes de l'invention sont également un processus pour la fabrication du composé de roman de la formule 1.
